# EUROPÄISCHE PATENTSCHRIFT

(11) **EP 2 518 902 B1**
(45) Veröffentlichungstag und Bekanntmachung des Hinweises auf die Patenterteilung: **28.08.2013**
(21) Anmeldenummer: 11163763.3
(22) Anmeldetag: 26.04.2011
(51) Int. Cl.: H04B 1/08, G05G 9/02, G05G 23/00, H01H 19/00, H01H 19/08, B60R 16/00, B60K 37/06, G05G 1/08

(54) **Bedienteil für ein Kraftfahrzeug**
Operating section for a motor vehicle
Elément de commande pour un véhicule automobile

(43) Veröffentlichungstag der Anmeldung: 31.10.2012
(73) Patentinhaber: Technisat Digital Gmbh, 54550 Daun (DE)
(72) Erfinder: Jentsch, Dipl.-Ing. Rochus Werner, 01307, Dresden (DE); Hill, Dipl.-Ing. Hans-Georg, 01069, Dresden (DE)

(56) Entgegenhaltungen:
- EP-A1- 0 702 385
- WO-A1-2009/081493
- WO-A1-2010/106730
- DE-U1-202006 002 969

## Beschreibung

Die Erfindung betrifft ein elektrisches oder elektronisches Bedienteil für ein Kraftfahrzeug und ein Verfahren zum Montieren des Bedienteils.

Herkömmliche in Kraftfahrzeugen eingebaute Geräte und Aggregate, beispielsweise Autoradios, Navigationsgeräte, Klimaanlagen und Bordcomputer, verfügen über elektrische oder elektronische Bedienteile, welche eine manuelle Bedienung, das heißt eine Bedienung durch einen Menschen, ermöglichen.

Die WO 2010/10730 offenbart offenbart ein Bedienteil nach dem Oberbegriff des Anspruchs 1.

Ein derartiges Bedienteil weist ein Frontteil auf, hinter dem eine mit Leiterbahnen versehene Frontleiterplatte angeordnet ist. Auf der dem Frontteil zugewandten Vorderseite der Frontleiterplatte sind neben anderen elektrischen und elektronischen Bauelementen in der Regel auch Bedienelemente befestigt, welche zum Aktivieren, Deaktivieren oder Einstellen bestimmter Funktionen des zugehörigen Geräts oder Aggregats dienen. Bei den Bedienelementen handelt es sich beispielsweise um Druckschalter, Tasten, Drehschalter, Stufenschalter, Schiebeschalter oder Drehregler. Die Bedienelemente sind durch jeweils zugeordnete Löcher des Frontteils hindurchgeführt, sodass sie vom Fahrzeuginneren aus bedient werden können.

Ein derartiges Bedienelement verfügt über elektrische Kontakte, die mit Leiterbahnen der Frontleiterplatte elektrisch verbunden sind. Ferner verfügt das Bedienelement über ein Betätigungselement, beispielsweise einen Drehknopf, welches von der Vorderseite des Frontteils aus, welche der Frontleiterplatte gegenüberliegt, zugänglich ist. Daher kann das Betätigungselement im montierten Zustand des Bedienteils per Hand betätigt, beispielsweise gedrückt oder gedreht, werden.

Die Ausrichtung eines auf einer Frontleiterplatte befestigten Bedienelements bezüglich eines Frontteils wird durch die konstruktive Gestaltung des Bedienelements, seine Anordnung auf der Frontleiterplatte und die Ausrichtung der Frontleiterplatte bezüglich des Frontteils bestimmt. Beispielsweise ragt ein Bedienelement senkrecht aus der Vorderseite eines Frontteils heraus, wenn die Hauptachse des Bedienelements senkrecht zu einer Grundfläche des Bedienelements verläuft, welche plan auf der Frontleiterplatte aufliegt, während die Frontleiterplatte parallel zur Vorderseite des Frontteils ausgerichtet ist.

Somit wird der Winkel, in welchem das Bedienelement aus der Vorderseite des Frontteils herausragt, unter anderem durch die Anordnung der Frontleiterplatte bezüglich des Frontteils vorgegeben. Das ist beispielsweise dann nachteilig, wenn das Bedienelement aus Design- oder Ergonomiegründen in einem anderen als dem derart vorgegebenen Winkel aus der Vorderseite des Frontteils herausragen soll. Beispielsweise soll das Bedienelement schräg aus der Vorderseite des Frontteils herausragen. Dies kann insbesondere bei einer gewölbten Vorderseite des Frontteils wünschenswert sein.

Folglich besteht die Aufgabe der Erfindung darin, ein elektrisches oder elektronisches Bedienteil für ein Kraftfahrzeug mit einer Frontleiterplatte, einem Frontteil und einem auf der Frontleiterplatte befestigten Bedienelement bereitzustellen, bei dem der Winkel, in dem das Bedienelement aus der Vorderseite des Frontteils herausragt, unabhängig von der Ausrichtung der Frontleiterplatte bezüglich des Frontteils einstellbar ist. Außerdem soll das Bedienteil mit geringen Fertigungskosten herstellbar sein.

Die Aufgabe wird durch das elektrische oder elektronische Bedienteil für ein Kraftfahrzeug gemäß der Erfindung gelöst.

Das erfindungsgemäße Bedienteil weist ein Frontteil und eine dahinter angeordnete, einstückig ausgebildete Frontleiterplatte auf. Die Frontleiterplatte weist einen an dem Frontteil anliegenden ersten Leiterplattenabschnitt, einen zweiten Leiterplattenabschnitt, auf dem ein Bedienelement befestigt ist, welches durch ein Loch des Frontteils hindurchgeführt ist, und einen biegsamen dritten Leiterplattenabschnitt auf, welcher den ersten Leiterplattenabschnitt mit dem zweiten Leiterplattenabschnitt verbindet. Die Ebene des zweiten Leiterplattenabschnitts ist bezüglich der Ebene des ersten Leiterplattenabschnitts geneigt.

Der biegsame dritte Leiterplattenabschnitt ermöglicht es, den Neigungswinkel des zweiten Leiterplattenabschnitts bezüglich des ersten Leiterplattenabschnitts einzustellen. Da der erste Leiterplattenabschnitt an dem Frontteil anliegt und das Bedienelement auf dem zweiten Leiterplattenabschnitt befestigt ist, kann gleichzeitig mit dem genannten Neigungswinkel auch der Winkel eingestellt werden, in dem das Bedienelement aus der Vorderseite des Frontteils herausragt, und zwar unabhängig von der Ausrichtung der Frontleiterplatte bezüglich des Frontteils.

Die Fertigungskosten für das erfindungsgemäße Bedienteil sind aufgrund der einstückigen Ausführung der Frontleiterplatte und der konstruktiven Gestaltung des Bedienteils, welche nur wenige Bauteile erfordert und eine kurze Fertigungszeit ermöglicht, besonders niedrig.

Zusätzlich zu dem Bedienteil wird ein Verfahren zum Montieren eines elektrischen oder elektronischen Bedienteils gemäß der Erfindung bereitgestellt.

Bei dem Verfahren werden ein Frontteil und eine einstückig ausgebildete Frontleiterplatte bereitgestellt, wobei die Frontleiterplatte einen ersten Leiterplattenabschnitt, einen zweiten Leiterplattenabschnitt, auf dem ein Bedienelement befestigt ist, und einen biegsamen dritten Leiterplattenabschnitt, welcher den ersten Leiterplattenabschnitt mit dem zweiten Leiterplattenabschnitt verbindet, aufweist. Die Frontleiterplatte wird hinter dem Frontteil derart angeordnet, dass der erste Leiterplattenabschnitt an dem Frontteil anliegt und das Bedienelement durch ein Loch des Frontteils geführt ist. Auf den zweiten Leiterplattenabschnitt wird ein Druck ausgeübt, sodass die Ebene des zweiten Leiterplattenabschnitts bezüglich der Ebene des ersten Leiterplattenabschnitts geneigt wird.

Weitere Ausführungsformen der Erfindung sind aus den abhängigen Patentansprüchen zu entnehmen.

Die Erfindung wird anhand von Ausführungsformen weiter erläutert. Dabei stellen die Figuren Folgendes dar:
Figur 1 zeigt eine Frontleiterplatte gemäß einer Ausführungsform der Erfindung in einer Draufsicht.

Die Figuren 2 und 3 zeigen jeweils einen Ausschnitt der Frontleiterplatte in einer Draufsicht und in einer Seitenansicht.
Figur 4 zeigt den Ausschnitt der Frontleiterplatte in einer Schnittdarstellung.
Figur 5 zeigt die Rückseite des Ausschnitts der Frontleiterplatte in einer Draufsicht.
Figur 6 zeigt den Ausschnitt der Frontleiterplatte in einer Schnittdarstellung.
Figur 7 zeigt die Rückseite des Ausschnitts der Frontleiterplatte in einer Draufsicht.

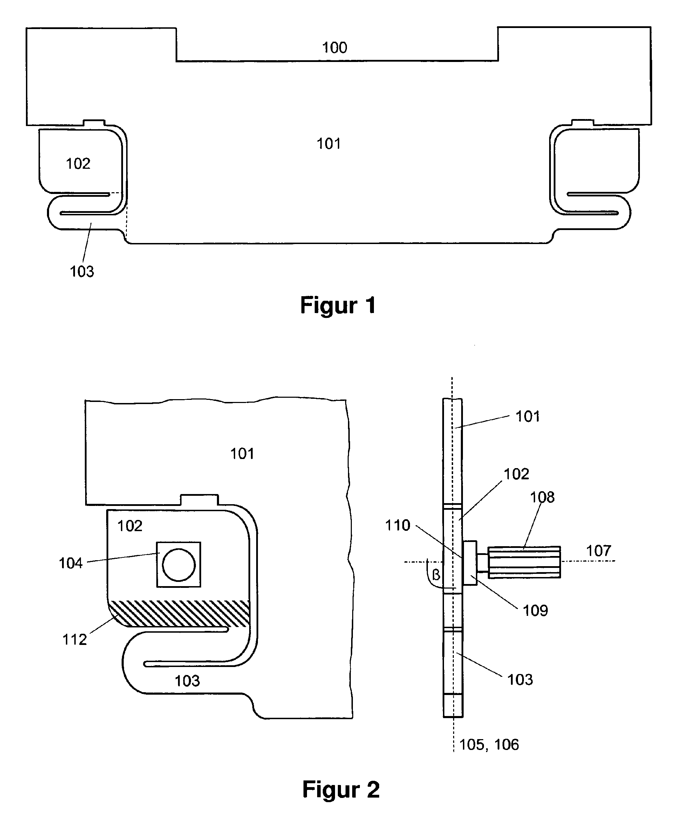

**Figur 1** zeigt eine Frontleiterplatte 100 gemäß einer Ausführungsform der Erfindung in einer Draufsicht.

Die als dünne, ebene Platte ausgebildete Frontleiterplatte 100 ist Teil eines elektrischen oder elektronischen Bedienteils für ein Kraftfahrzeug.

Als Trägermaterial der Frontleiterplatte 100 kommt ein elektrisch isolierendes Material zum Einsatz, beispielsweise faserverstärkter Kunststoff. Auf dem Trägermaterial haften elektrisch leitfähige Verbindungen (nicht gezeigt), die üblicherweise aus einer dünnen Kupferschicht geätzt sind.

Die Frontleiterplatte 100 ist einstückig ausgebildet, das heißt aus einem Stück hergestellt, beispielsweise mittels Aussägens aus einer Roh-Leiterplatte. Folglich ist die Frontleiterplatte 100 nicht aus mehreren Einzelteilen zusammengesetzt.

Ferner weist die Frontleiterplatte 100 einen ersten Leiterplattenabschnitt 101, einen zweiten Leiterplattenabschnitt 102 und einen dritten Leiterplattenabschnitt 103 auf, wobei der dritte Leiterplattenabschnitt 103 den ersten Leiterplattenabschnitt 101 mit dem zweiten Leiterplattenabschnitt 102 verbindet. Die Grenze zwischen dem ersten Leiterplattenabschnitt 101 und dem zweiten Leiterplattenabschnitt 102 und die Grenze zwischen dem zweiten Leiterplattenabschnitt und dem dritten Leiterplattenabschnitt 103 sind durch gestrichelte Linien markiert.

Neben den in Figur 1 bezeichneten Leiterplattenabschnitten 102 und 103 weist die Frontleiterplatte 100 an ihrer rechten Seite zwei weitere derartige Leiterplattenabschnitte auf, welche spiegelverkehrt zu den bezeichneten Leiterplattenabschnitten 102 und 103 ausgebildet sind.

Die Frontleiterplatte 100 kann mit elektrischen und elektronischen Bauelementen bestückt sein, die in Figur 1 nicht gezeigt sind.

**Figur 2** zeigt einen Ausschnitt der Frontleiterplatte 100 in einer Draufsicht und in einer Seitenansicht von links.

Der Ausschnitt der Frontleiterplatte 100 umfasst einen Bereich des ersten Leiterplattenabschnitts 101, den zweiten Leiterplattenabschnitt 102 und den dritten Leiterplattenabschnitt 103.

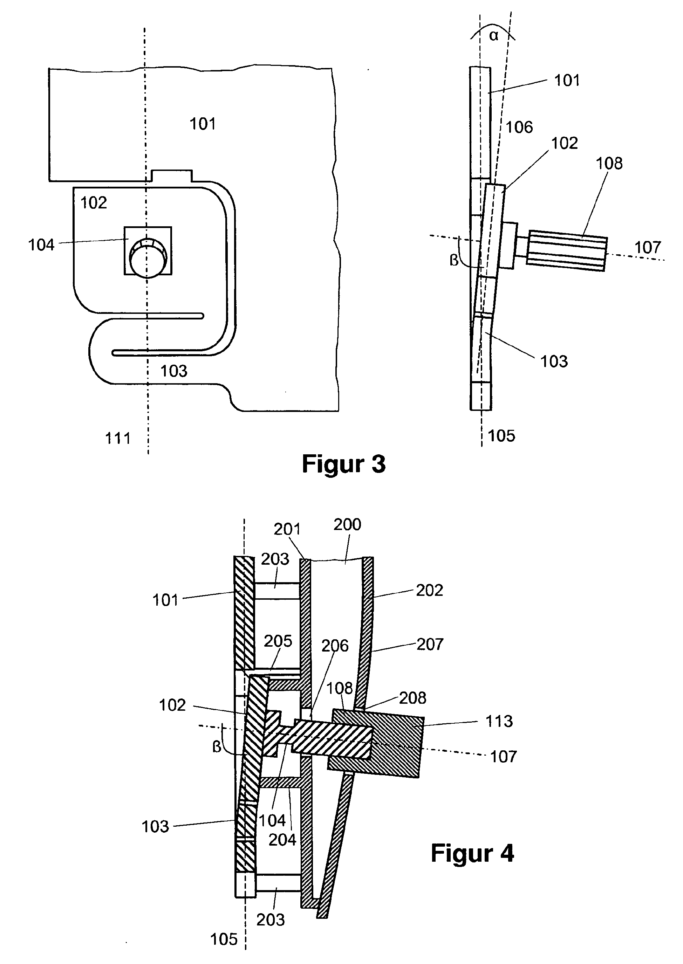

Der dritte Leiterplattenabschnitt 103 ist derart gestaltet, dass er zusammen mit einem schraffiert dargestellten streifenförmigen Bereich 112 an derjenigen Seite des zweiten Leiterplattenabschnitts 102, welche dem dritten Leiterplattenabschnitt 103 zugewandt ist, eine Mäanderform bildet. Die Vorteile dieser Art der Gestaltung des dritten Leiterplattenabschnitts 103 werden weiter unten bezugnehmend auf Figur 3 erläutert.

Weiterhin zeigt Figur 2 einen Inkrementalgeber 104, der auf der Vorderseite des zweiten Leiterplattenabschnitts 102 befestigt ist. Bei dem Inkrementalgeber 104 handelt es sich um ein Bedienelement, dessen Winkeländerung oder Drehrichtung erfasst wird.

Alternativ zu dem gezeigten Inkrementalgeber 104 kann auch ein anderes Bedienelement vorgesehen sein, beispielsweise ein Druckschalter, eine Taste, ein Drehschalter, ein Stufenschalter, ein Schiebeschalter oder ein Drehregler.

Der Inkrementalgeber 104 verfügt über elektrische Kontakte (nicht gezeigt), die mit Leiterbahnen (nicht gezeigt) des zweiten Leiterplattenabschnitts 102 verbunden sind. Ferner verfügt der Inkrementalgeber 104 über einen Sockel 109 und einen Drehzapfen 108, der mit einem zu dem Inkrementalgeber 104 gehörigen Drehknopf verbunden werden kann, wie in Figur 4 gezeigt wird. Der Drehzapfen 108 ist um eine Drehachse 107 drehbar.

Der Sockel 109 des Inkrementalgebers 104 ist auf dem zweiten Leiterplattenabschnitt 102 beispielsweise mittels einer Klebeverbindung oder einer Lötverbindung derart befestigt, dass die Drehachse 107 senkrecht zur Ebene 106 des zweiten Leiterplattenabschnitts 102 verläuft. Dies ist dadurch bedingt, dass die Grundfläche 110 des Sockels 109 plan auf der Vorderseite des zweiten Leiterplattenabschnitts 102 aufliegt, wobei die Drehachse 107 senkrecht zu der Grundfläche 110 verläuft.

Im vorliegenden Fall ist der zweite Leiterplattenabschnitt 102 bezüglich des ersten Leiterplattenabschnitts 101 nicht geneigt, weshalb die Ebene 105 des ersten Leiterplattenabschnitts 101 und die Ebene 106 des zweiten Leiterplattenabschnitts 102 parallel zueinander verlaufen. Daher sind beide Ebenen durch eine gemeinsame gestrichelte Linie symbolisiert. Ferner beträgt daher der Winkel β zwischen dem ersten Leiterplattenabschnitt 101 und der Drehachse 107 circa 90 Grad.

**Figur 3** zeigt den Ausschnitt der Frontleiterplatte 100 in einer Draufsicht und in einer Seitenansicht von links.

Im Unterschied zu Figur 2 ist in Figur 3 der zweite Leiterplattenabschnitt 102 bezüglich des ersten Leiterplattenabschnitts 101 geneigt. Mit anderen Worten ist die Ebene 106 des zweiten Leiterplattenabschnitts 102 bezüglich der Ebene 105 des ersten Leiterplattenabschnitts 101 geneigt.

In der Seitenansicht sind die Ebene 105 und die Ebene 106 jeweils als eine gestrichelte Linie dargestellt. Die Ebene 105 ist parallel zur Vorderseite des ersten Leiterplattenabschnitts 101 ausgerichtet, während die Ebene 106 parallel zur Vorderseite des zweiten Leiterplattenabschnitts 102 ausgerichtet ist. Der Neigungswinkel α zwischen beiden Ebenen 105, 106 beträgt 5 Grad, kann aber auch einen anderen Wert annehmen, welcher typischerweise zwischen 3 und 7 Grad liegt.

Aufgrund der Neigung ist der dritte Leiterplattenabschnitt 103 leicht verbogen, wie ein Vergleich des in der Seitenansicht von Figur 3 gezeigten dritten Leiterplattenabschnitts 103 mit dem in der Seitenansicht von Figur 2 gezeigten dritten Leiterplattenabschnitt 103 verdeutlicht. Zusätzlich ist der dritte Leiterplattenabschnitt 103 wegen der Neigung auch leicht verdreht, mit anderen Worten verwunden.

Aufgrund der Neigung ist außerdem der Winkel β zwischen dem ersten Leiterplattenabschnitt 101 und der Drehachse 107 gegenüber Figur 2 vergrößert und beträgt nun circa 95 Grad. Daher ist die Drehachse 107 des Inkrementalgebers 104 vorn etwas nach unten geneigt.

Die von dem dritten Leiterplattenabschnitt 103 gemeinsam mit dem streifenförmigen Bereich 112 (siehe Figur 2) des zweiten Leiterplattenabschnitts 102 gebildete Mäanderform ermöglicht zusammen mit der Elastizität des dritten Leiterplattenabschnitts 103, den zweiten Leiterplattenabschnitt 102 bezüglich des ersten Leiterplattenabschnitts 101 im Neigungswinkel α zu neigen, ohne dass der dritte Leiterplattenabschnitt 103 beschädigt wird, beispielsweise bricht oder Oberflächenrisse bekommt. Insbesondere werden entlang des dritten Leiterplattenabschnitts 103 geführte Leiterbahnen (nicht gezeigt) nicht beschädigt, beispielsweise zerrissen.

Das ist darin begründet, dass die entlang der Mäanderform verlaufende Leiterplattenbahn besonders lang ist, weshalb die in einem Teilabschnitt der Leiterplattenbahn vorliegende Verbiegung und damit auch die Biegebelastung in diesem Teilabschnitt besonders gering ist.

Daneben ermöglicht die Mäanderform ein laterales Verschieben des zweiten Leiterplattenabschnitts 102 bezüglich des ersten Leiterplattenabschnitts 101, sodass der Abstand zwischen dem zweiten Leiterplattenabschnitt 102 und dem ersten Leiterplattenabschnitt 101 verändert werden kann, ohne dass es zu Beschädigungen kommt. Das laterale Verschieben kann beispielsweise dann notwendig sein, wenn aufgrund von Fertigungstoleranzen die Position eines für den Inkrementalgeber 104 vorgesehenen Lochs in einem Frontteil variiert, was ein entsprechendes Variieren der Position des Inkrementalgebers 104 erfordert.

**Figur 4** zeigt den Ausschnitt der Frontleiterplatte 100 in einer Schnittdarstellung entlang einer in Figur 3 dargestellten Schnittlinie 111.

Zusätzlich ist ein Ausschnitt eines Frontteils 200 dargestellt, welches ebenfalls zu dem elektrischen oder elektronischen Bedienteil gehört. Das Frontteil 200 ist aus mehreren Einzelteilen zusammengesetzt, kann alternativ dazu aber auch einstückig ausgebildet sein. Das Frontteil 200 verfügt über einen Frontträger 201, auf dem eine Frontblende 202 befestigt ist, beispielsweise mittels Verklebens, Verschraubens, Verschweißens oder Verrastens.

Der Frontträger 201 weist zwei zylinderförmige Verbindungselemente 203 auf, welche zum Verbinden des ersten Leiterplattenabschnitts 101 mit dem Frontträger 201 dienen. Der erste Leiterplattenabschnitt 101 ist mit den Verbindungselementen 203 beispielsweise verschraubt, wodurch der erste Leiterplattenabschnitt 101 und damit die Frontleiterplatte 100 an dem Frontteil 200 befestigt ist.

Zusätzlich zu den beiden in Figur 4 gezeigten Verbindungselementen 203 weist der Frontträger 201 noch zumindest ein weiteres derartiges Verbindungselement (nicht gezeigt) auf, sodass der an den Verbindungselementen anliegende erste Leiterplattenabschnitt 101 bezüglich des Frontteils 200 nicht verkippt werden kann. Dadurch ist die Ebene des ersten Leiterplattenabschnitts 101 parallel zur Ebene des Frontträgers 201 ausgerichtet.

Ferner ist der Frontträger 201 mit einem ringförmigen Abstandshalter 204 versehen, auf dem der zweite Leiterplattenabschnitt 102 aufliegt, und mit einem Rasthaken 205, der den zweiten Leiterplattenabschnitt 102 auf dem ringförmigen Abstandshalter 204 festhält. Alternativ zu dem Rasthaken 205 kann aber auch ein anderes Befestigungsmittel, beispielsweise ein anderes Rastmittel, vorgesehen sein.

Des Weiteren ist der Frontträger von einem ersten Loch 206 durchbrochen, durch welches der Drehzapfen 108 des Inkrementalgebers 104 geführt ist.

Die Frontblende 202 des Frontteils 200 hat eine gekrümmte Vorderseite 207 und ein zweites Loch 208, welches kreisförmig ausgebildet ist und durch welches der Drehzapfen 108 des Inkrementalgebers 104 ebenfalls hindurchgeführt ist.

Zur besseren Bedienbarkeit des Inkrementalgebers 104 ist der Drehzapfen 108 von einem zylinderförmigen Drehknopf 113 umgeben, welcher mit dem Drehzapfen 108 formschlüssig verbunden ist. Der Drehknopf 113 kann einstückig oder mehrstückig ausgebildet sein, beispielsweise eine Beschriftung oder ein beleuchtetes Element aufweisen.

Wegen der Neigung des zweiten Leiterplattenabschnitts 102 bezüglich des ersten Leiterplattenabschnitts 101 ist der Drehknopf 113 vorn nach unten geneigt. Im vorliegenden Fall tritt der Drehknopf 113 nahezu senkrecht aus der gekrümmten Vorderseite 207 des Frontteils 200 aus.

Aufgrund der einstückigen Ausführung der Frontleiterplatte 100 und der konstruktiven Gestaltung der Frontleiterplatte 100 und des Frontteils 200 reichen für die Herstellung des Bedienteils wenige Bauteile aus. Außerdem werden Materialkosten eingespart, indem als Frontleiterplatte 100 eine handelsübliche Standard-Leiterplatte verwendet werden kann, also keine Leiterplatte mit besonderen Biegeeigenschaften benötigt wird. Unter einer Leiterplatte mit besonderen Biegeeigenschaften ist beispielsweise eine Leiterplatte zu verstehen, die sowohl starre Bereiche als auch flexible Bereiche aufweist, oder eine mit Biegefugen versehene Leiterplatte.

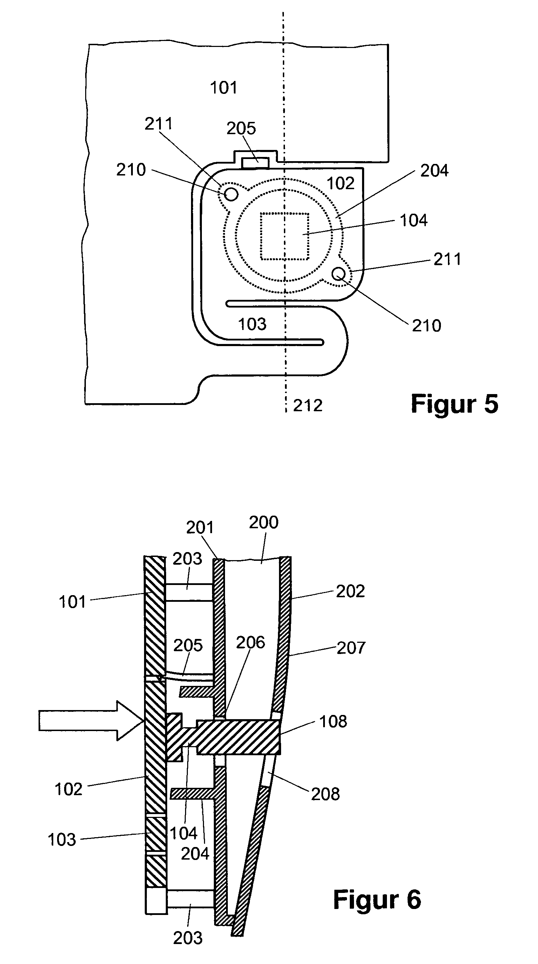

Im Folgenden wird bezugnehmend auf die **Figuren 5 bis 7** ein Verfahren zum Montieren des Bedienteils gemäß einer Ausführungsform der Erfindung beschrieben.

Die einzelnen Schritte des Verfahrens können jeweils entweder manuell, beispielsweise durch einen Monteur, oder maschinell, beispielsweise mittels eines Montageautomaten, ausgeführt werden.

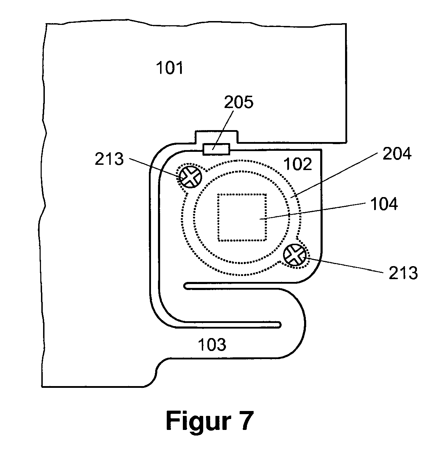

Die Figuren 5 und 7 zeigen jeweils die Rückseite des Ausschnitts der Frontleiterplatte 100 in einer Draufsicht, während Figur 6 den Ausschnitt der Frontleiterplatte 100 in einer Schnittdarstellung entlang der in Figur 5 dargestellten Schnittlinie 212 zeigt.

Bei einem ersten Verfahrensschritt werden das oben beschriebene Frontteil 200 und die oben beschriebene Frontleiterplatte 100 bereitgestellt.

Bei einem zweiten Verfahrensschritt wird die Frontleiterplatte 100 derart angeordnet, dass der erste Leiterplattenabschnitt 101 an den Verbindungselementen 203 des Frontteils 200 anliegt und der Drehzapfen 108 des Inkrementalgebers 104 durch das Loch 206 des Frontträgers 201 geführt ist, wie Figur 6 zeigt.

Dazu kann beispielsweise das Frontteil 200 mit seiner Vorderseite 207 nach unten positioniert werden, wonach die Frontleiterplatte 100 mit ihrer Vorderseite nach unten auf das Frontteil aufgesetzt wird, sodass der Drehzapfen 108 durch das Loch 206 gesteckt wird.

Gemäß einer Ausführungsform der Erfindung wird der erste Leiterplattenabschnitt 101 fest mit den Verbindungselementen 203 und damit mit dem Frontteil 200 verbunden, beispielsweise verschraubt oder verklebt.

Bezugnehmend auf Figur 5 weist der zweite Leiterplattenabschnitt 102 zwei bisher nicht gezeigte kreisförmige Löcher 210 auf. Ferner verdeckt der zweite Leiterplattenabschnitt 102 den Abstandshalter 204, welcher deshalb punktiert dargestellt ist.

Der Abstandshalter 204 weist zwei bisher nicht gezeigte Verdickungen 211 auf, die jeweils mit einem Gewindeloch versehen sind, das sich unter einem der Löcher 210 des zweiten Leiterplattenabschnitts 102 befindet. Somit korrespondiert jedes der beiden Gewindelöcher des Abstandshalters 204 mit einem der Löcher 210 des zweiten Leiterplattenabschnitts 102.

Zusätzlich ist der Inkrementalgeber 104 gezeigt, welcher auf der dem Betrachter abgewandten Rückseite des zweiten Leiterplattenabschnitts 102 befestigt und daher punktiert dargestellt ist.

Außerdem ist in den Figuren 5 und 6 der Rasthaken 205 zu sehen. Der Rasthaken 205 liegt an dem zweiten Leitplattenabschnitt 102 an, ist aber nicht mit diesem verrastet. Stattdessen wird der Rasthaken 205 durch den zweiten Leiterplattenabschnitt 102 etwas nach oben gebogen, wie insbesondere Figur 6 zu entnehmen ist. Das Verbiegen des Rasthakens 205, welches beim Anlegen der Frontleiterplatte 100 an das Frontteil 200 eintritt, ist durch das Anordnen des Rasthakens 205 nahe an dem Abstandshalter 204 bedingt. Aufgrund des Verbiegens steht der Rasthaken 205 unter einer mechanischen Vorspannung, sodass er später beim Drücken des zweiten Leiterplattenabschnitts 102 auf den Abstandshalter 204 mit dem zweiten Leiterplattenabschnitt 102 verrastet (siehe unten).

Wie Figur 6 zeigt, ist der zweite Leiterplattenabschnitt 102 zu diesem Zeitpunkt von dem Abstandshalter 204 beabstandet, liegt also noch nicht auf dem Abstandshalter 204 auf.

Bei einem dritten Verfahrensschritt wird der zweite Leiterplattenabschnitt 102 auf den Abstandshalter 204 gedrückt, sodass der Rasthaken 205 mit dem zweiten Leiterplattenabschnitt 102 verrastet, wie in Figur 4 gezeigt ist. Dazu wird eine Druckkraft auf die dem Frontteil 200 abgewandte Rückseite des zweiten Leiterplattenabschnitts 102 ausgeübt, wobei die Druckkraft etwa senkrecht auf die Rückseite des zweiten Leiterplattenabschnitts 102 trifft. Die Richtung der Druckkraft ist durch den Pfeil in Figur 6 symbolisiert.

Durch das Drücken des zweiten Leiterplattenabschnitts 102 auf den Abstandshalter 204 wird der zweite Leiterplattenabschnitt 102 bezüglich des ersten Leiterplattenabschnitts 101 geneigt, wobei der dritte Leiterplattenabschnitt 103 verbogen wird. Mit anderen Worten wird die Ebene 106 des zweiten Leiterplattenabschnitts 102 bezüglich der Ebene 105 des ersten Leiterplattenabschnitts 101 geneigt.

Zu bemerken ist, dass die Löcher 206 und 208 so dimensioniert sind, dass ein während des Neigens des zweiten Leiterplattenabschnitts 102 auftretendes Bewegen des Drehzapfens 108 in den Löchern 206, 208 möglich ist.

Der Rasthaken 205 verrastet aufgrund seiner mechanischen Vorspannung automatisch mit dem zweiten Leiterplattenabschnitt 102, sobald dieser den Abstandshalter 204 erreicht.

Nach Abschluss des dritten Verfahrensschritts wird der zweite Leiterplattenabschnitt 102 von dem Rasthaken 205 in einer bezüglich des ersten Leiterplattenabschnitts 101 geneigten Stellung an dem Abstandshalter 204 festgehalten. Der Rasthaken 205 vermeidet so ein unerwünschtes Lösen des zweiten Leiterplattenabschnitts 102 von dem ringförmigen Abstandshalter während der Montage des Bedienteils. Weiterhin sind die Löcher 210 des zweiten Leiterplattenabschnitts 102 genau über den Gewindelöchern des Abstandshalters positioniert. Damit liegen beste Voraussetzungen für das Ausführen eines vierten Verfahrensschritts vor.

Bezugnehmend auf Figur 7 wird bei dem vierten Verfahrensschritt der zweite Leiterplattenabschnitt 102 mittels eines weiteren Befestigungsmittels an dem Frontteil 200 befestigt. Im vorliegenden Fall wird der zweite Leiterplattenabschnitt 102 mittels zweier Schrauben 213 mit dem Abstandshalter 204 verschraubt. Die Schrauben 213 werden durch die Löcher 210 des zweiten Leiterplattenabschnitts 102 in die korrespondierenden Gewindelöcher des Abstandshalters 204 eingeführt und dann bis zum Anschlag in die Gewindelöcher eingedreht.

Das Verschrauben des zweiten Leiterplattenabschnitts 102 mit dem Abstandshalter 204 ist notwendig, weil der Rasthaken 205 zwar zum Festhalten des zweiten Leiterplattenabschnitts 102 während der Montage geeignet ist, aber nicht zum dauerhaften Festhalten des zweiten Leiterplattenabschnitts 102 während des bestimmungsgemäßen Gebrauchs des Bedienteils, bei dem besondere mechanische Belastungen durch Erschütterungen und das manuelle Bedienen des Drehknopfs 113 auftreten.

Andererseits ist auch der Rasthaken 205 unverzichtbar. Wenn nämlich beim Eindrehen der Schrauben 213 der zweite Leiterplattenabschnitt 102 von dem Abstandshalter 204 beabstandet wäre, bestünde die Gefahr, dass sich die Schrauben 213 nach dem Einführen in die Löcher 210 des zweiten Leiterplattenabschnitts 102 verkanten würden und dadurch nicht gerade in die Gewindelöcher des Abstandshalters 204 eingeführt würden. Damit würde das Verschrauben des zweiten Leiterplattenabschnitts 102 mit dem Abstandshalter 204 erschwert. Da aber der Rasthaken während der Montage den zweiten Leiterplattenabschnitt 102 an dem Abstandshalter 204 festhält, wobei sich die Löcher 210 des zweiten Leiterplattenabschnitts 102 genau über den Gewindelöchern des Abstandshalters befinden, wird die genannte Gefahr vermieden.

Folglich wird durch das Verrasten des Rasthakens 205 mit dem zweiten Leiterplattenabschnitt 102 ein problemloses Verschrauben des zweiten Leiterplattenabschnitts 102 mit dem Abstandshalter 204 ermöglicht, was die Montage des Bedienteils erleichtert.

Optional können die Löcher 210 an der Vorderseite des zweiten Leiterplattenabschnitts 102 von jeweils einer kreisförmigen Kupferfläche umgeben sein, deren Durchmesser größer als der Kopfdurchmesser einer der Schrauben 213 ist. Damit wird ein Beschädigen des zweiten Leiterplattenabschnitts 102, insbesondere darauf haftender elektrischer Leiterbahnen, beim Eindrehen der Schrauben 213 vermieden.

Nach dem Abschluss des vierten Verfahrensschritts wird der zweite Leiterplattenabschnitt 102 von den beiden Schrauben 213 sicher an dem Abstandshalter 204 festgehalten, sodass der Inkrementalgeber 104 in seiner Stellung bezüglich der Vorderseite 207 des Frontteils 200 stabil fixiert ist. Bezugnehmend auf Figur 4 ist damit sichergestellt, dass der anschließend auf dem Inkrementalgeber 104 montierte Drehknopf 113 seine Position bezüglich der Vorderseite 207 der Frontblende 202 trotz der Belastungen, denen der Drehknopf 113 während der Fahrt und bei seiner Bedienung ausgesetzt ist, beibehält. Insbesondere ist somit sichergestellt, dass der Drehknopf 113 seine Position bezüglich der Vorderseite 207 der Frontblende 202 auch dann beibehält, wenn der Rasthaken 205 bricht.

Alternativ zu den Schrauben 213 und den Gewindelöchern kann auch ein anderes Befestigungsmittel zum Befestigen des zweiten Leiterplattenabschnitts 102 an dem Abstandshalter 204 verwendet werden, beispielsweise ein Haltestift.

Der Neigungswinkel des zweiten Leiterplattenabschnitts 102 bezüglich des ersten Leiterplattenabschnitts 101 kann durch ein geeignetes Dimensionieren des Abstandshalters 204 und des Rasthakens 205 eingestellt werden. Je weniger der Abstandshalter 204 aus dem Frontträger 201 herausragt und je kürzer der Rasthaken 205 ist, umso größer ist der Neigungswinkel des zweiten Leiterplattenabschnitts 102 bezüglich des ersten Leiterplattenabschnitts 101.

Mit dem Einstellen des Neigungswinkels des zweiten Leiterplattenabschnitts 102 bezüglich des ersten Leiterplattenabschnitts 101 wird auch der Winkel, in welchem der Drehknopf 113 aus der Vorderseite 207 der Frontblende 202 herausragt, eingestellt. Der Winkel des Drehknopfs 113 wird allerdings durch die Biegefestigkeit des dritten Leiterplattenabschnitts 103 begrenzt. Daneben wird der Winkel des Drehknopfs 113 auch durch den Abstand zwischen der Frontleiterplatte 100 und dem Frontträger 201 begrenzt.

Zu bemerken ist, dass auf die beschriebene Weise der Winkel des Drehknopfs 113 auch bezüglich anderer elektrischer oder elektronischer Bauelemente, die auf dem ersten Leiterplattenabschnitt 101 befestigt sind, einstellbar ist. Beispielsweise kann der Drehknopf 113 bezüglich einer Taste oder einer Anzeigeeinheit, die auf dem ersten Leiterplattenabschnitt 101 befestigt ist, eingestellt werden.

Im Folgenden wird unter Bezugnahme auf Figur 6 eine weitere Ausführungsform des erfindungsgemäßen Verfahrens vorgestellt.

Bei einem ersten Verfahrensschritt werden das oben beschriebene Frontteil 200 und die oben beschriebene Frontleiterplatte 100 bereitgestellt.

Bei einem zweiten Verfahrensschritt wird ein Klebstoff auf den zweiten Leiterplattenabschnitt 102 der Frontleiterplatte 100 oder den Abstandshalter 204 des Frontteils 200 aufgetragen.

Dann wird bei einem dritten Verfahrensschritt die Frontleiterplatte 100 derart angeordnet, dass der erste Leiterplattenabschnitt 101 an den Verbindungselementen 203 des Frontteils 200 anliegt und der Drehzapfen 108 des Inkrementalgebers 104 durch das Loch 206 des Frontträgers 201 ragt.

Danach wird bei einem vierten Verfahrensschritt der zweite Leiterplattenabschnitt 102 auf den Abstandshalter 204 gedrückt, sodass der Rasthaken 205 mit dem zweiten Leiterplattenabschnitt 102 verrastet, wie in Figur 4 gezeigt ist.

Bei einem fünften Verfahrensschritt wird der Kleber ausgehärtet, wonach der zweite Leiterplattenabschnitt 102 sicher an dem Abstandshalter 204 befestigt ist.

Der besondere Vorteil dieser Ausführungsform der Erfindung gegenüber der vorhergehenden Ausführungsform besteht darin, dass auf die Schrauben 213 und die zugehörigen Löcher 210, Verdickungen 211 und Gewindelöcher verzichtet werden kann.

## Patentansprüche

1. Elektrisches oder elektronisches Bedienteil für ein Kraftfahrzeug, welches ein Frontteil (200) und eine hinter dem Frontteil (200) angeordnete, einstückig ausgebildete Frontleiterplatte (100) aufweist,
wobei die Frontleiterplatte (100)
einen an dem Frontteil (200) anliegenden ersten Leiterplattenabschnitt (101) und
einen zweiten Leiterplattenabschnitt (102), auf dem ein Bedienelement (104) befestigt ist, welches durch ein Loch (206) des Frontteils geführt ist aufweist **gekennzeichnet dadurch** daβ die
Frontleitesplatte (100) einen biegsamen dritten Leiterplattenabschnitt (103) aufweist welcher den ersten Leiterplattenabschnitt (101) mit dem zweiten Leiterplattenabschnitt (102) verbindet,
und
die Ebene (106) des zweiten Leiterplattenabschnitts (102) bezüglich der Ebene (105) des ersten Leiterplattenabschnitts (101) geneigt ist.

2. Elektrisches oder elektronisches Bedienteil gemäß Anspruch 1,
wobei der dritte Leiterplattenabschnitt (103) zusammen mit einem streifenförmigen Bereich (112) an derjenigen Seite des zweiten Leiterplattenabschnitts (102), welche dem dritten Leiterplattenabschnitt (103) zugewandt ist, eine Mäanderform bildet.

3. Elektrisches oder elektronisches Bedienteil gemäß einem der Ansprüche 1 oder 2,
wobei das Frontteil (200) einen Abstandshalter (204) aufweist und der zweite Leiterplattenabschnitt (102) unter Verwendung eines ersten Befestigungsmittels auf dem Abstandshalter (204) befestigt ist.

4. Elektrisches oder elektronisches Bedienteil gemäß Anspruch 3,
wobei das erste Befestigungsmittel ein Rastmittel aufweist.

5. Elektrisches oder elektronisches Bedienteil gemäß Anspruch 4,
wobei das Rastmittel einen Rasthaken (205) aufweist, der an dem Frontteil (200) befestigt und mit dem zweiten Leiterplattenabschnitt (102) verrastet ist.

6. Elektrisches oder elektronisches Bedienteil gemäß einem der Ansprüche 3 bis 5,
wobei der zweite Leiterplattenabschnitt (102) unter Verwendung eines zweiten Befestigungsmittels auf dem Abstandshalter (204) befestigt ist.

7. Elektrisches oder elektronisches Bedienteil gemäß einem der vorhergehenden Ansprüche,
wobei der erste Leiterplattenabschnitt (101) an dem Frontteil (200) befestigt ist.

8. Elektrisches oder elektronisches Bedienteil gemäß einem der vorhergehenden Ansprüche,
wobei die Ebene (106) des zweiten Leiterplattenabschnitts (102) bezüglich der Ebene (105) des ersten Leiterplattenabschnitts (101) in einem Neigungswinkel zwischen 3 Grad und 7 Grad geneigt ist.

9. Verfahren zum Montieren eines elektrischen oder elektronischen Bedienteils für ein Kraftfahrzeug mit den Schritten:
Bereitstellen eines Frontteils (200) und einer einstückig ausgebildeten Frontleiterplatte (100), wobei die Frontleiterplatte (100) einen ersten Leiterplattenabschnitt (101), einen zweiten Leiterplattenabschnitt (102), auf dem ein Bedienelement (104) befestigt ist, und einen biegsamen dritten Leiterplattenabschnitt (103), welcher den ersten Leiterplattenabschnitt (101) mit dem zweiten Leiterplattenabschnitt (102) verbindet, aufweist,
Anordnen der Frontleiterplatte (100) hinter dem Frontteil (200), sodass der erste Leiterplattenabschnitt (101) an dem Frontteil (200) anliegt und das Bedienelement (104) durch ein Loch des Frontteils (200) geführt ist, und
Ausüben eines Drucks auf den zweiten Leiterplattenabschnitt (102), sodass die Ebene (106) des zweiten Leiterplattenabschnitts (102) bezüglich der Ebene (105) des ersten Leiterplattenabschnitts (101) geneigt wird.

10. Verfahren gemäß Anspruch 9,
wobei der dritte Leiterplattenabschnitt (103) zusammen mit einem streifenförmigen Bereich (112) an derjenigen Seite des zweiten Leiterplattenabschnitts (102), welche dem dritten Leiterplattenabschnitt (103) zugewandt ist, eine Mäanderform bildet.

11. Verfahren gemäß einem der Ansprüche 9 oder 10,
wobei das Frontteil (200) einen Abstandshalter (204) aufweist und der zweite Leiterplattenabschnitt (102) unter Verwendung eines ersten Befestigungsmittels auf dem Abstandshalter (204) befestigt wird.

12. Verfahren gemäß Anspruch 11,
wobei das erste Befestigungsmittel ein Rastmittel aufweist.

13. Verfahren gemäß Anspruch 12,
wobei das Rastmittel einen Rasthaken (205) aufweist, der an dem Frontteil (200) befestigt ist und mit dem zweiten Leiterplattenabschnitt (102) verrastet wird, wenn der zweite Leiterplattenabschnitt (102) den Abstandshalter (204) erreicht.

14. Verfahren gemäß einem der Ansprüche 11 bis 13,
wobei der zweite Leiterplattenabschnitt (102) unter Verwendung eines zweiten Befestigungsmittels auf dem Abstandshalter (204) befestigt wird.

15. Verfahren gemäß einem der Ansprüche 9 bis 14,
wobei der erste Leiterplattenabschnitt (101) an dem Frontteil (200) befestigt wird.

## Claims

1. Electrical or electronic operating unit for a motor vehicle which comprises a front part (200) and a front printed circuit board (100) arranged behind the front part (200) and formed in one piece,
wherein the front printed circuit board (100) comprises a first printed circuit board section (101) which rests against the front part (200) and a second printed circuit board section (102) on which a control element (104) passed through a whole (206) of the front part (200) is mounted,
**characterized in that**
the front printed circuit board (100) comprises a flexible third printed circuit board section (103) which connects the first printed circuit board section (101) with the second printed circuit board section (102) and
the plane (106) of the second printed circuit board section (102) is inclined with respect to the plane (105) of the first printed circuit board section (101).

2. Electrical or electronic operating unit according to claim 1,
wherein the third printed circuit board section (103) together with a strip-shaped area (112) on that side of the second printed circuit board section (102) which faces the third printed circuit board section (103) forms a meandering shape.

3. Electrical or electronic operating unit according to claim 1 or claim 2,
wherein the front part (200) comprises a spacer (204) and the second printed circuit board section (102) is mounted on the spacer (204) using a first mounting means.

4. Electrical or electronic operating unit according to claim 3,
wherein the first mounting means comprises a latching means.

5. Electrical or electronic operating unit according to claim 4,
wherein the latching means comprises a latching hook (205) which is mounted on the front part (200) and latched with the second printed circuit board section (102).

6. Electrical or electronic operating unit according to one of the claims 3 to 5,
wherein the second printed circuit board section (102) is mounted on the spacer (204) using a second mounting means.

7. Electrical or electronic operating unit according to one of the preceding claims,
wherein the first printed circuit board section (101) is mounted on the front part (200).

8. Electrical or electronic operating unit according to one of the preceding claims,
wherein the plane of the second printed circuit board section (102) is inclined with respect to the plane of the first printed circuit board section (101) at an inclination angle between 3 degrees and 7 degrees.

9. Method for assembling an electrical or electronic operating unit for a motor vehicle with the steps:
providing a front part (200) and a front printed circuit board (100) formed in one piece wherein the front printed circuit board (100) comprises a first printed circuit board section (101), a second printed circuit board section (102) with a control element (104) mounted on it and a flexible third printed circuit board section (103) which connects the first printed circuit board section (101) with the second printed circuit board section (102), arranging the front printed circuit board (100) behind the front part (200) in such a way that the first printed circuit board section (101) rests against the front part (200) und the control element (104) is passed through a whole (206) of the front part (200) and applying a pressure onto the second printed circuit board section (102) in such a way that the plane (106) of the second printed circuit board section (102) is inclined with respect to the plane (105) of the first printed circuit board section (101).

10. Method according to claim 9,
wherein the third printed circuit board section (103) together with a strip-shaped area (112) on that side of the second printed circuit board section (102) which faces the third printed circuit board section (103) forms a meandering shape.

11. Method according to claim 9 or claim 10,
wherein the front part (200) comprises a spacer (204) and the second printed circuit board section (102) is mounted on the spacer (204) using a first mounting means.

12. Method according to claim 11,
wherein the first mounting means comprises a latching means.

13. Method according to claim 12,
wherein the latching means comprises a latching hook (205) which is mounted on the front part (200) and latched with the second printed circuit board section (102) when the second printed circuit board section (102) reaches the spacer (204).

14. Method according to one of the claims 11 to 13,
wherein the second printed circuit board section (102) is mounted on the spacer (204) using a second mounting means.

15. Method according to one of the claims 9 to 14,
wherein the first printed circuit board section (101) is mounted on the front part (200).

## Revendications

1. Dispositif de commande électrique ou électronique pour véhicule, équipé d'une partie avant (200) et d'une carte imprimée avant (100) d'une pièce placée derrière la partie avant (200),
la carte imprimée avant (100)
étant constituée d'une première section de carte imprimée (101) placée contre la partie avant (200) et
d'une seconde section de carte imprimée (102) sur laquelle est fixé un organe de commande (104) traversant un trou (206) de la partie avant, **caractérisée en ce que** la carte imprimée avant (100) possède une troisième section de carte imprimée souple (103) reliant la première section de carte imprimée (101) à la seconde section de carte imprimée (102)
et
que le plan (106) de la seconde section de carte imprimée (102) est incliné par rapport au plan (105) de la première section de carte imprimée (101).

2. Dispositif de commande électrique ou électronique selon la revendication 1,
la troisième section de carte imprimée (103) formant un méandre avec une zone en forme de bande (112) du côté de la seconde section de carte imprimée (102), qui est tourné vers la troisième section de carte imprimée(103).

3. Dispositif de commande électrique ou électronique selon la revendication 1 ou 2,
la partie avant (200) étant munie d'un écarteur (204) et la seconde section de carte imprimée (102) étant fixée sur l'écarteur (204) par un premier élément de fixation.

4. Dispositif de commande électrique ou électronique selon la revendication 3,
le premier élément de fixation étant doté d'un dispositif d'arrêt.

5. Dispositif de commande électrique ou électronique selon la revendication 4,
le dispositif d'arrêt étant doté d'un crochet d'arrêt (205) fixé à la partie avant (200) et s'enclenchant avec la seconde section de carte imprimée (102).

6. Dispositif de commande électrique ou électronique selon l'une des revendications 3 à 5,
la seconde section de carte imprimée (102) étant fixée sur l'écarteur (204) par un second élément de fixation.

7. Dispositif de commande électrique ou électronique selon l'une des revendications précédentes,
la première section de carte imprimée (101) étant fixée à la partie avant (200).

8. Dispositif de commande électrique ou électronique selon l'une des revendications précédentes,
le plan (106) de la seconde section de carte imprimée (102) étant incliné de 3 à 7 degrés par rapport au plan (105) de la première section de carte imprimée (101).

9. Procédure de montage d'un dispositif de commande électrique ou électronique pour véhicule, comprenant les étapes suivantes :
fourniture d'une partie avant (200) et d'une carte imprimée avant (100) d'une pièce, la carte imprimée avant (100) étant composée d'une première section de carte imprimée (101), d'une seconde section de carte imprimée (102) sur laquelle est fixé un organe de commande (104) et d'une troisième section de carte imprimée souple (103) reliant la première section de carte imprimée (101) à la seconde section de carte imprimée (102), mise en place de la carte imprimée avant (100) derrière la partie avant (200) de sorte que la première section de carte imprimée (101) soit placée contre la partie avant (200) et que l'organe de commande (104) traverse un trou de la partie avant (200), et application d'une pression sur la seconde section de carte imprimée (102) de sorte que le plan (106) de la seconde section de carte imprimée (102) soit incliné par rapport au plan (105) de la première section de carte imprimée (101).

10. Procédure selon la revendication 9,
la troisième section de carte imprimée (103) formant un méandre avec une zone en forme de bande (112) du côté de la seconde section de carte imprimée (102), qui est tourné vers la troisième section de carte imprimée(103).

11. Procédure selon la revendication 9 ou 10,
la partie avant (200) étant munie d'un écarteur (204) et la seconde section de carte imprimée (102) étant fixée sur l'écarteur (204) par un premier élément de fixation.

12. Procédure selon la revendication 11,
le premier élément de fixation étant doté d'un dispositif d'arrêt.

13. Procédure selon la revendication 12,
le dispositif d'arrêt étant doté d'un crochet d'arrêt (205) fixé à la partie avant (200) et s'enclenchant avec la seconde section de carte imprimée (102) lorsque la seconde section de carte imprimée (102) atteint l'écarteur (204).

14. Procédure selon l'une des revendications 11 à 13,
la seconde section de carte imprimée (102) étant fixée sur l'écarteur (204) par un second élément de fixation.

15. Procédure selon l'une des revendications 9 à 14,
la première section de carte imprimée (101) étant fixée à la partie avant (200).
